# FASCICULE DE BREVET EUROPEEN

(11) **EP 3 498 454 B1**
(45) Date de publication et mention de la délivrance du brevet: **03.04.2024**
(21) Numéro de dépôt: 18212554.2
(22) Date de dépôt: 14.12.2018
(51) Int. Cl.: B29C 55/16

(54) **MACHINE D'ÉTIRAGE DE FILMS EN MATIÈRE THERMOPLASTIQUE ET PROCÉDÉ**
MASCHINE ZUM STRECKEN VON THERMOPLASTISCHEN FOLIEN UND VERFAHREN
THERMOPLASTIC FILM STRETCHING MACHINE AND METHOD

(30) Priorité: 15.12.2017 FR 1762211
(43) Date de publication de la demande: 19.06.2019
(73) Titulaire: Darlet, Jean-Pierre, Shanghai 200020 (CN)
(72) Inventeur: Darlet, Jean-Pierre, Shanghai 200020 (CN)
(74) Mandataire: LLR

(56) Documents cités:
- CN-B- 102 848 568
- CN-B- 103 434 128
- FR-A1- 2 924 048

## Description

La présente invention concerne une machine d'étirage de films en matière thermoplastique réalisant un étirage d'un film thermoplastique simultanément dans le sens longitudinal et dans le sens transversal. L'invention concerne également un procédé de réalisation de l'étirage d'un film thermoplastique, utilisant cette machine.

Il est bien connu, notamment par la publication de demande de brevet français N° FR 2 924 048 A1, de réaliser l'étirage d'un film en matière synthétique thermoplastique au moyen d'une machine réalisant l'étirage simultané du film dans le sens longitudinal et dans le sens transversal, alors que la matière du film est rendue malléable par chauffage.

Une telle machine est représentée sur la figure 1, vue de dessus, de façon schématique et très simplifiée ; la figure 2 montre une portion de cette machine à échelle agrandie et la figure 3 est une vue en perspective d'un ensemble de saisie et d'étirage du film.

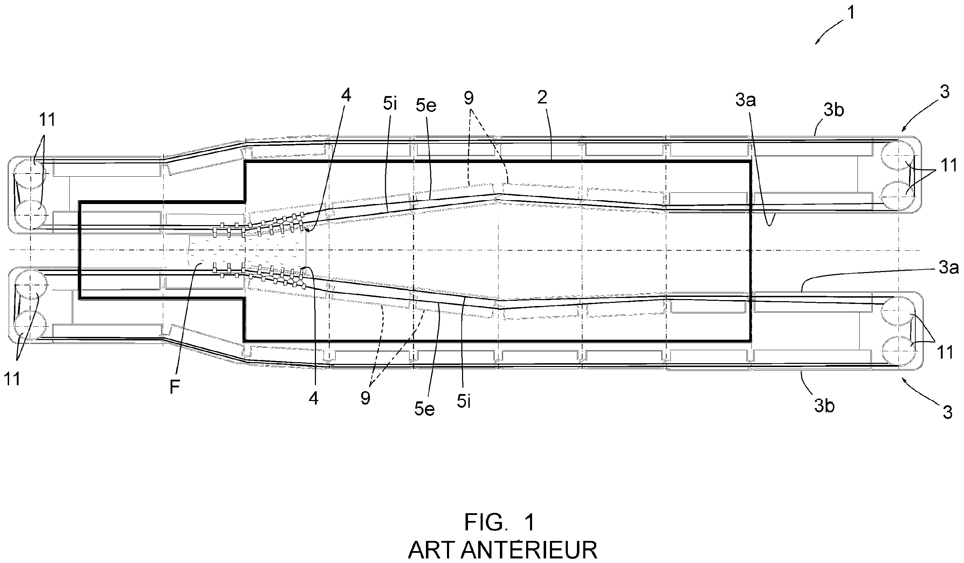

Comme le montre la figure 1, la machine 1 comprend essentiellement, de façon bien connue en soi :
- un tunnel chauffant 2 permettant l'échauffement de la matière plastique du film F à étirer ;
- deux chemins sans fin 3 de circulation de pinces 4 de saisie des bords latéraux du film F, situés de part et d'autre du trajet du film F dans le tunnel 2 ; chaque chemin 3 présente une portion longitudinale interne 3a, s'étendant en majeure partie à l'intérieur du tunnel 2, et une portion longitudinale externe 3b, s'étendant à l'extérieur du tunnel 2, et comprend une paire de rails de guidage 5i, 5e, sous forme de fers plats sur chants ; l'un de ces rails 5i est dit "intérieur", c'est-à-dire le plus proche du bord du film F, et l'autre rail 5e est dit "extérieur", c'est-à-dire plus éloigné du bord de ce film F.

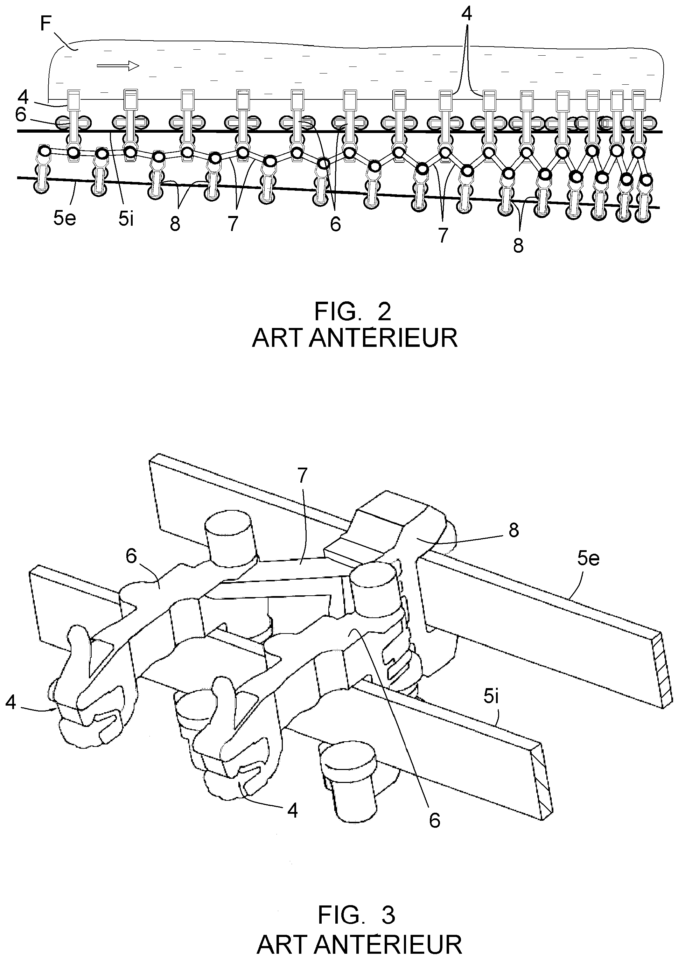

Comme cela est plus particulièrement visible sur les figures 2 et 3, lesdites pinces de saisie 4 sont montées sur des premiers coulisseaux 6 circulant le long du rail de guidage intérieur 5i ; ces premiers coulisseaux 6 sont reliés à des paires de bielles 7, qui sont elles-mêmes reliées à des deuxièmes coulisseaux 8 circulant le long du rail de guidage extérieur 5e.

Les ensembles pinces 4 /coulisseaux 6, 8 / bielles 7 s'étendent sur l'ensemble des chemins 3 ; seule une partie d'entre eux est représentée sur la figure 1. La circulation de ces ensembles sur les rails 5i, 5e d'un chemin 3 est réalisée au moyen d'une chaîne sans fin reliée à ces ensembles, circulant sur des roues d'entraînement 11 situées à l'extérieur du tunnel chauffant 2.

En référence particulièrement à la figure 2, il se comprend que la distance séparant les deux rails 5i, 5e l'un de l'autre n'est pas constante au long de ladite portion longitudinale interne 3a, et que le rail extérieur 5e, sur une partie de cette portion destinée à réaliser une contraction longitudinale du film F, s'éloigne progressivement du rail 5i ; cet éloignement permet l'augmentation de la distance des coulisseaux 8 par rapport aux coulisseaux 6, donc de refermer les bielles 7 et, ce faisant, de rapprocher progressivement les pinces 4 successives les unes des autres, réalisant ladite contraction longitudinale du film F ; cette contraction est couramment dénommée "étirement négatif".

De retour à la figure 1, il apparaît que les rails 5i, 5e d'une même paire de rails, en une partie antérieure des deux portions internes 3a, s'éloignent l'un de l'autre, réalisant un tel étirement négatif du film F, puis se rapprochent l'un de l'autre, réalisant ensuite un étirement positif de ce film F.

Toujours en référence à cette figure 1, il apparaît que, par ailleurs, les paires de rails 5i, 5e des deux portions internes 3a s'infléchissent simultanément de façon à s'éloigner l'une de l'autre sur une partie de ces portions internes 3a, de façon à réaliser un étirement transversal du film F ; les parties aval de ces deux portions internes 3a peuvent rester dans une position d'éloignement, de sorte que ledit étirement transversal est conservé, ou peuvent, comme représenté sur la figure 1, converger à l'une vers l'autre.

Les deux rails 5i, 5e d'une même paire de rails présentent des capacités de déformations transversales permettant leurs variations mutuelles de distance et leurs inflexions précitées ; ces rails sont montés sur des moyens de réglage de la distance respective d'un rail par rapport à l'autre, non visibles sur les figures 1 à 3, permettant de régler le degré d'étirement longitudinal positif ou négatif du film F ; les paires de rails 5i, 5e desdites portions internes 3a sont par ailleurs montées sur des embases 9 successives articulées les unes aux autres et dont les positions par rapport au film F, dans la direction transversale à ce film, peuvent être réglées, de façon à régler le degré d'étirement transversal du film F.

Certains films doivent être étirés à des températures relativement basses, ce qui requiert des efforts d'étirage importants. Certains films spéciaux exigent qu'il soit nécessaire de mettre en oeuvre simultanément un étirage transversal et un étirage longitudinal négatif, c'est-à-dire impliquant le passage desdits coulisseaux 6, 8 sur des portions des rails 5i, 5e divergeant l'une de l'autre. Des efforts très importants sont alors générés sur le système à chaînes sans fin et roues 11 d'entraînement des ensembles coulisseaux 6, 8 / bielles 7, compte tenu de la fermeture progressive des bielles 7.

Ces efforts très importants ont pour conséquence une variation des intervalles des pinces d'un côté à l'autre du film, qui influe directement sur les propriétés du film étiré et par conséquent sur la qualité finale du film obtenu. Il en résulte que les machines actuelles ne permettent que de faibles taux d'étirements négatifs et qu'elles ne sont pas à même de satisfaire à l'évolution de la demande du marché, qui porte sur des films nécessitant des taux d'étirages négatifs parfois très importants.

La présente invention a pour objectif principal de remédier à ce problème essentiel.

Par ailleurs, ce système existant implique une intervention mécanique pour être adapté aux différentes valeurs d'écartement des pinces qui sont requises selon les différents types de films à étirer et les différents étirements à réaliser, ce qui est une contrainte pratique très importante.

La présente invention a également pour objectif de remédier à cet inconvénient.

En outre, sur une machine existante, l'écartement minimal qu'il est possible d'adopter entre des pinces successives reste relativement limité, ce qui limite en conséquence les degrés d'étirement qu'il est possible de mettre en oeuvre, alors qu'il existe le besoin de degrés d'étirement inférieurs à ce que permet cette machine.

La présente invention a aussi pour objectif de remédier à cet inconvénient, et donc à offrir une plus large plage d'écartements possible entre des pinces successives.

Par ailleurs, le document DE 25 35 032 B1 décrit une machine d'étirement transversal de film comprenant un rail unique sur chaque côté du film, sur lequel se déplacent des coulisseaux reliés aux pinces de saisie du film. La machine comprend deux ensembles de bandes sans fin disposés en dessous des rails respectifs, les bandes sans fin d'un ensemble étant disposées côte à côte, mais avec décalage longitudinal d'une bande à l'autre en allant dans la direction d'avance du film, de façon à suivre la direction du rail. Chaque bande sans fin est crantée et vient en prise avec des doigts solidaires des coulisseaux, réalisant une assistance à la progression des pinces sur les rails, et ces doigts passent d'une bande sans fin à la bande sans fin consécutive au fur et à mesure de la progression des coulisseaux sur les rails.

La machine selon ce document antérieur permet uniquement un étirement transversal du film et ce document antérieur ne fournit aucune solution aux problèmes techniques précités, en particulier aux problèmes d'effort d'étirage importants en cas d'étirage d'un film à des températures relativement basses, ou d'efforts très importants générés sur le système à chaînes sans fin d'entraînement des pinces en cas de mise en oeuvre simultanée d'un étirage transversal et d'un étirage longitudinal négatif.

La machine concernée par la présente invention comprend, de manière connue en soi, les caractéristiques mentionnées dans la partie pré-caractérisante de la revendication 1 annexée, lesquelles caractéristiques sont connues par la publication de demande de brevet précitée N° FR 2 924 048 A1.

Les caractéristiques constituant l'invention sont mentionnées dans la partie caractérisante de la revendication 1 annexée.

L'inventeur a pu identifier le fait que les efforts importants générés sur les chaînes d'entraînement selon la technique antérieure généraient des déformations de ces chaînes, qui ont des longueurs conséquentes, et que ces déformations étaient à l'origine de la variation des intervalles des pinces d'un côté à l'autre du film. L'inventeur a alors pu concevoir de mettre en oeuvre au moins un sous-ensemble localisé d'assistance, présent à l'intérieur du tunnel chauffant, agissant directement sur lesdits deuxièmes coulisseaux de façon à soulager la chaîne d'entraînement du chemin sur lequel se trouve ce sous-ensemble.

En outre, il apparaît que grâce à un sous-ensemble d'assistance conforme à l'invention, il est possible d'adopter un écartement de deux pinces successives moins important que l'écartement minimal entre deux pinces successives que permet une machine conforme à la technique antérieure.

De préférence, chaque sous-ensemble d'assistance est situé sur l'extérieur dudit rail extérieur.

De préférence, les roues sur lesquelles circulent la chaîne ou courroie sans fin d'un sous-ensemble d'assistance ont des axes verticaux.

De préférence, chaque organe de poussée est sous la forme d'un doigt faisant saillie de ladite chaîne ou courroie sans fin, sur l'extérieur de celle-ci.

De préférence, chaque organe de poussée comprend une partie d'extrémité libre qui est mobile par rapport à une partie de base reliée à ladite chaîne ou courroie ; cette mobilité se fait entre une position d'extension de la partie d'extrémité libre par rapport à la partie de base, dans laquelle l'organe de poussée est à même d'exercer une poussée contre un coulisseau, et une position rétractée de la partie d'extrémité libre par rapport à cette partie de base, dans laquelle cette partie d'extrémité libre est effacée vis-à-vis d'un coulisseau ; un moyen élastique agit sur chaque partie d'extrémité libre de façon à maintenir normalement cette partie d'extrémité libre dans ladite position d'extension.

Il est en effet possible, selon l'étirement du film à réaliser, et donc selon la position qu'un coulisseau est à même d'avoir par rapport à un organe de poussée amené par ladite chaîne ou courroie en l'état d'exercer une poussée, que cet organe de poussée se trouve exactement en regard de ce coulisseau ; dans une telle situation, la capacité de l'organe de poussée à se rétracter permet d'éviter ce conflit et donc tout risque de détérioration de l'organe de poussée.

En l'absence de cette disposition, la machine selon l'invention reste utilisable mais certains réglages d'étirement ne peuvent pas être adoptés car ils sont susceptibles de générer des conflits entre les coulisseaux et les organes de poussée. Grâce à cette disposition, un éventuel conflit provoque simplement une rétractation de l'organe de poussée, et c'est un autre organe de poussée qui va exercer une poussée, sur un autre coulisseau.

Cette même possibilité de rétractation d'un organe de poussée permet, en cas d'efforts trop importants, un échappement de cet organe de poussée, et donc un débrayage du sous-ensemble d'assistance. Ce débrayage évite un risque de détérioration de la machine.

De préférence, la machine selon l'invention comprend une pluralité de sous-ensembles d'assistance tels que précités, dont chacun présente une longueur inférieure à la longueur de la zone d'une portion longitudinale interne au niveau de laquelle un étirement du film est susceptible d'être réalisé. Cette longueur peut en particulier être inférieure à sensiblement à un quart de la longueur d'une telle zone, et de préférence inférieure à un huitième, voire moins, de cette longueur.

Il sera compris que la longueur d'un sous-ensemble d'assistance est la distance séparant les extrémités longitudinales que forme la chaîne ou courroie sans fin.

De préférence, en cas d'une telle pluralité de sous-ensembles d'assistance, les sous-ensembles d'assistance sont situés en regard les uns des autres dans le sens transversal de la direction d'avance du film, de façon à égaliser sur les deux côtés du film les poussées qu'ils exercent sur les coulisseaux.

Avantageusement, la portion d'un deuxième coulisseau contre laquelle un organe de poussée est apte à être amené à exercer une poussée est sous la forme d'un galet.

Un tel galet permet de favoriser l'échappement de ladite partie d'extrémité libre par rapport au coulisseau en cas de conflit avec ce coulisseau ou en cas d'efforts trop importants.

De préférence, chaque sous-ensemble d'assistance comprend des moyens électroniques de limitation du couple d'entraînement exercé par le moyen d'entraînement sur ladite chaîne ou courroie.

Ces moyens de limitation permettent d'éviter que le sous-ensemble subisse des à-coups lorsqu'un organe de poussée vient dépasser un coulisseau correspondant, ce déplacement résultant du fait que les intervalles entre les coulisseaux évoluent au long dudit brin de chaîne ou courroie alors que les intervalles entre les organes de poussée sont fixes ; de tels à-coups ne sont pas souhaitables, tant en ce qui concerne la régularité de l'étirement exercé sur le film qu'en ce qui concerne la résistance mécanique du sous-ensemble d'assistance. L'effort de traction procurée par le sous-ensemble d'assistance est ainsi ajusté au mieux.

Selon une possibilité, les organes de poussée peuvent comporter des aimants et les galets peuvent être en un matériau magnétique, ou inversement, de sorte qu'un collage magnétique des organes de poussée aux galets soit obtenu. Ce collage permet d'améliorer le contact entre chaque organe de poussée et un galet correspondant.

De préférence, chaque sous-ensemble d'assistance comprend une structure d'appui contre laquelle porte ledit brin de ladite chaîne ou courroie.

Cette structure d'appui permet ainsi de prévenir tout risque de flambage de la chaîne ou courroie, c'est-à-dire de déformation de cette chaîne ou courroie du côté opposé aux coulisseaux, donc tout risque d'échappement des organes de poussée hors de leur position de prise avec les coulisseaux. En effet, compte tenu des efforts subis par ladite chaîne ou courroie, et compte tenu de la souplesse de cette chaîne ou courroie, un tel flambage pourrait exister en l'absence de ladite structure d'appui, et donc conduire à une venue en prise insuffisante des organes de poussée avec les coulisseaux. Il pourrait en résulter un risque de détérioration de ces organes de poussée, voire à un risque d'échappement des organes de poussée vis-à-vis des coulisseaux.

Selon une forme de réalisation avantageuse de l'invention, chaque sous-ensemble d'assistance comprend un moteur d'entraînement de ladite chaîne ou courroie, ce moteur étant placé dans une enceinte de protection thermique.

La liaison entre ce moteur et la chaîne ou courroie est ainsi tout à fait directe et permet de d'éliminer des risques de déformation au niveau d'une transmission entre ce moteur et cette chaîne ou courroie, une telle déformation étant susceptible de rendre imprécise ou inefficace l'assistance produite par le sous-ensemble d'assistance. Le fait de placer le moteur dans une enceinte de protection thermique permet à ce moteur, et aux systèmes périphériques nécessaires au fonctionnement de ce moteur, de pouvoir résister à la température régnant dans le tunnel chauffant.

Au besoin, cette enceinte de protection thermique est refroidie.

De préférence, chaque sous-ensemble d'assistance inclut un moyen de variation du régime du moteur d'entraînement et des moyens de détection de la vitesse de déplacement des coulisseaux en amont et en aval de ce sous-ensemble d'assistance, ces moyens de détection étant reliés à une unité centrale de commande dudit moyen de variation du régime du moteur.

Les mesures effectuées par les deux moyens de détection permettent à l'unité centrale de déterminer si l'étirement en cours et un étirement positif ou négatif, et d'adapter en conséquence le régime du moteur. Le régime du moteur d'entraînement, et donc la vitesse de défilement des organes de poussée, est ainsi adapté en temps réel au déplacement des coulisseaux. S'il est déterminé que l'étirement en cours est un étirement négatif, l'unité centrale agit sur le régime du moteur de telle sorte que la vitesse de déplacement des organes de poussée soit supérieure à celle des coulisseaux au niveau dudit brin.

Cette vitesse de déplacement supérieure des organes de poussée assure qu'au moins un organe de poussée présent au niveau dudit brin est en prise avec un coulisseau et exerce une poussée sur ce coulisseau.

S'il est déterminé que l'étirement en cours est un étirement positif, le régime du moteur sera également adapté à la fourniture de l'assistance requise.

L'invention concerne également un procédé de réalisation de l'étirage d'un film thermoplastique comprenant les étapes consistant à :
- utiliser la machine citée ci-dessus, comprenant au moins un sous-ensemble d'assistance incluant ledit moyen de variation de la vitesse du moteur d'entraînement de ce sous-ensemble d'assistance et lesdits moyens de détection de la vitesse de déplacement des coulisseaux en amont et en aval de ce sous-ensemble d'assistance ; et
- régler le régime dudit moteur d'entraînement au moyen dudit variateur, lui-même commandé par l'unité centrale, en fonction des détections opérées par les moyens de détection de la vitesse de déplacement des coulisseaux, de telle sorte qu'en cas de détection de la réalisation d'un étirement négatif, ce régime soit tel que ladite chaîne ou courroie circule, au niveau dudit brin, à une vitesse linéaire supérieure à la vitesse linéaire des coulisseaux au niveau de ce même brin.

Grâce à cette vitesse supérieure, au moins un organe de poussée présent au niveau dudit brin est en prise avec un coulisseau et exerce une poussée sur ce coulisseau.

L'invention sera bien comprise, et d'autres caractéristiques et avantages de celle-ci apparaîtront, en référence au dessin schématique annexé ; ce dessin représente, à titre d'exemple non limitatif, une forme de réalisation préférée de la machine concernée. Dans ce dessin :
la figure 1 est une vue de dessus d'une machine connue, représentée de façon schématique et très simplifiée ;
la figure 2 est une vue de dessus, également schématique et très simplifiée, d'une portion de cette machine, à échelle agrandie ;
la figure 3 est une vue en perspective d'un ensemble de saisie et d'étirage du film, que comprend cette machine connue ;

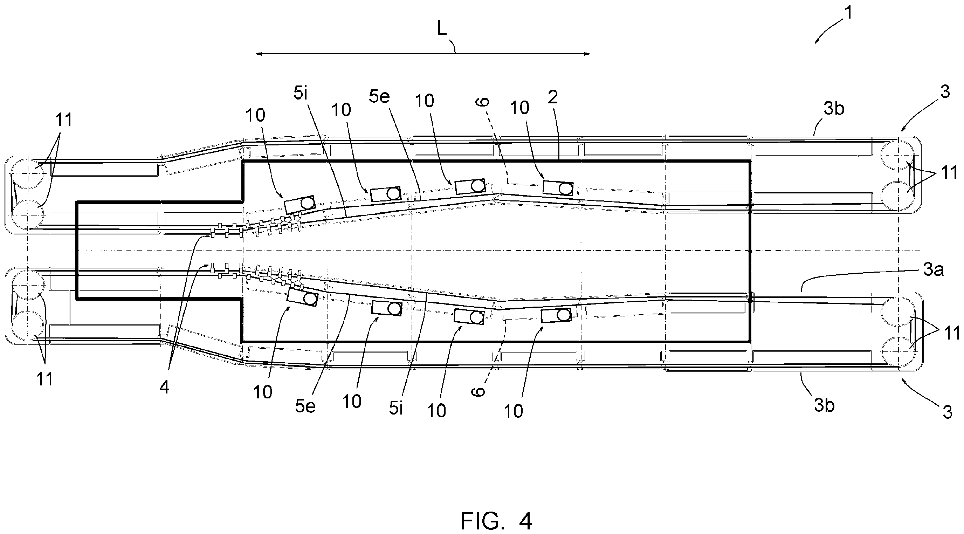

la figure 4 est une vue de la machine selon l'invention, similaire à la figure 1 ;

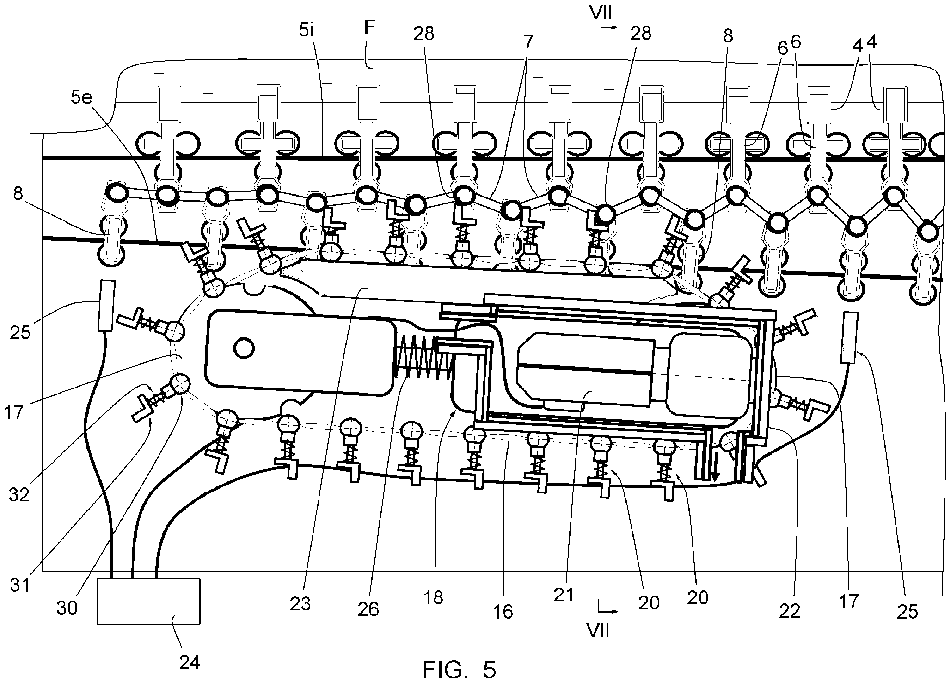

la figure 5 en est une vue similaire à la figure 2, montrant particulièrement l'un des sous-ensembles d'assistance que comprend cette machine ;

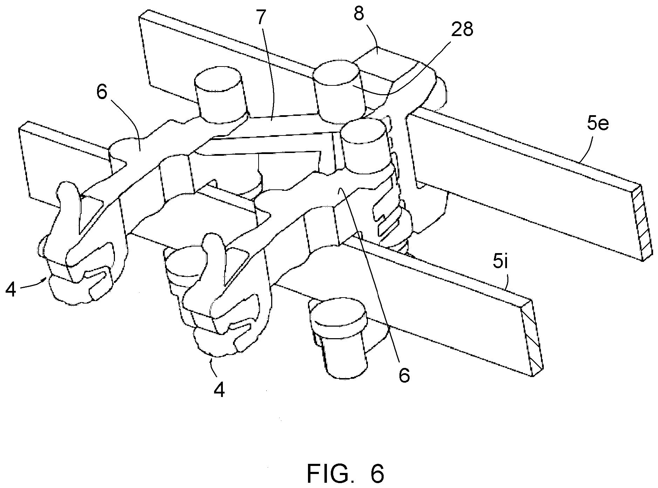

la figure 6 en est une vue similaire à la figure 3 ;

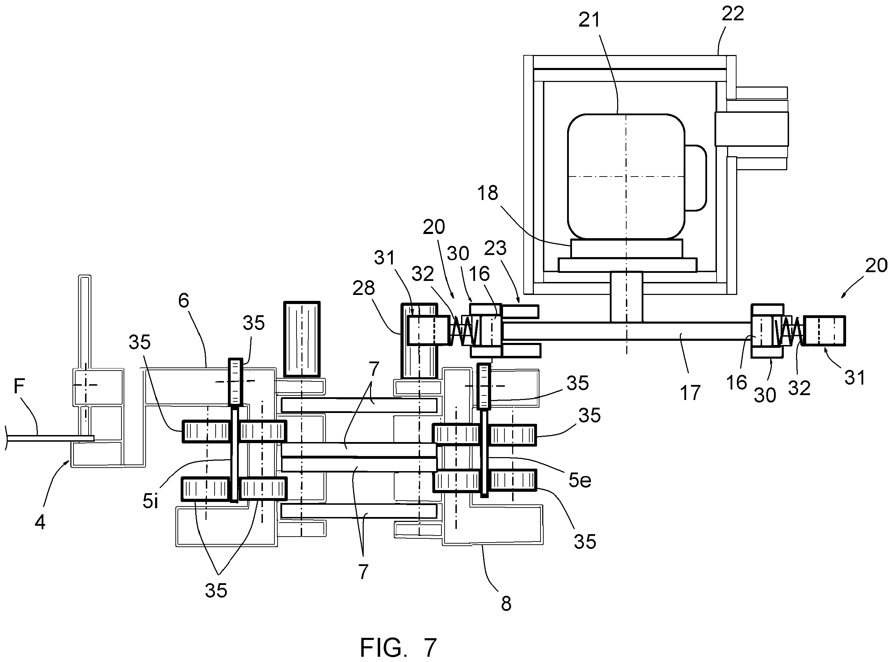

la figure 7 en est une vue en coupe selon la ligne VII-VII de la figure 5 ;

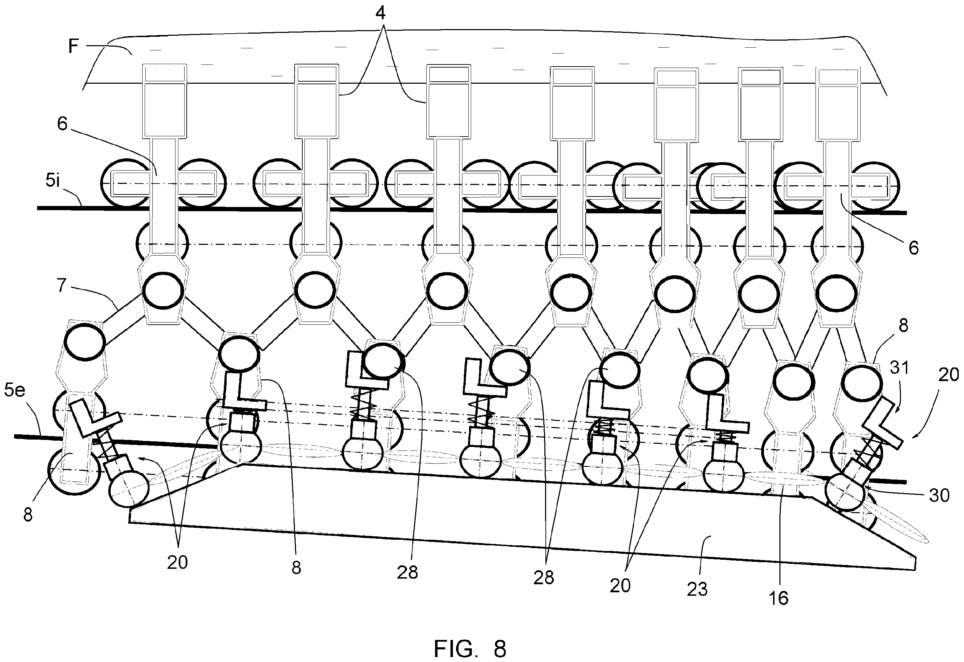

la figure 8 en est une vue similaire à la figure 5, à échelle agrandie ; et

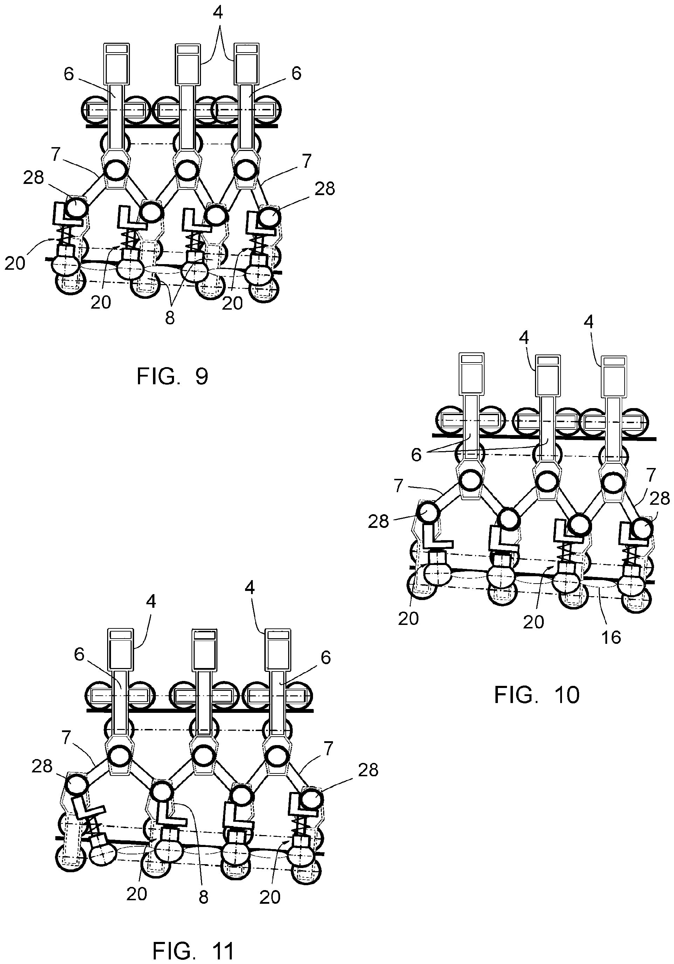

les figures 9 à 11 sont des vues de différentes situations d'engrènement d'organes de poussée avec des coulisseaux, que comprend la machine.

La figure 4 montre la machine 1 selon l'invention, qui est de même structure de base générale que la machine 1 décrite en référence aux figures 1 à 3 mais qui comprend des sous-ensembles 10 d'assistance au coulissement des coulisseaux 6, 8 sur les rails 5i, 5e ; les éléments ou parties déjà décrits, qui se retrouvent de façon identique, ne seront pas à nouveau décrits ci-après et seront simplement désignés par les mêmes références numériques.

Dans l'exemple représenté, la machine 1 comprend, huit sous-ensembles 10, dont chacun est situé dans le tunnel chauffant 2, en étant disposé sur une embase 9 et à proximité du rail extérieur 5e. Comme cela est visible, les sous-ensembles 10 sont situés en regard les uns des autres dans une direction transversale à la direction d'avance du film. Chacun d'eux a une longueur nettement inférieure à la longueur L de la zone d'une portion longitudinale interne 3a au niveau de laquelle un étirement du film est susceptible d'être réalisé ; cette longueur de chaque sous-ensemble 10 est, dans l'exemple représenté, de l'ordre du dixième de la longueur L de cette zone.

En référence à la figure 5, il apparaît qu'un sous-ensemble d'assistance 10 inclut :
- une chaîne 16 sans fin circulant sur deux roues 17 portées par un châssis 18 ;
- une pluralité d'organes de poussée 20, reliés à la chaîne 16 en succession les uns des autres et faisant saillie de cette chaîne, sur l'extérieur de celle-ci ;
- un motoréducteur 21 d'entraînement de l'une desdites roues 17, placé dans une enceinte 22 de protection thermique ;
- une structure d'appui 23 ;
- une unité centrale 24 de commande du motoréducteur 21, placée à l'extérieur du tunnel chauffant 2 ; et
- deux capteurs 25 de la vitesse de défilement des coulisseaux 8.

Comme cela est représenté, le châssis 18 est en deux parties et s'étend longitudinalement dans une direction parallèle à celle du rail 5e. L'une des parties du châssis 18 comporte le motoréducteur 21 et l'une des deux roues 17, laquelle est directement reliée à ce motoréducteur et est donc entraînée par celui-ci ; l'autre partie du châssis 18 comporte l'autre roue 17. Ces deux parties sont reliées l'une à l'autre de façon télescopique et un ressort 26 est interposé entre elles de façon à exercer une poussée sur ces deux parties, tendant à les écarter l'une de l'autre afin d'assurer une mise en tension permanente de la chaîne 16.

La chaîne 16 comporte les organes de poussée 20, fixés à elle. Le sous-ensemble 10 est disposé au-delà du rail 5e mais à proximité immédiate de celui-ci, de manière qu'un brin de la chaîne 16 soit parallèle à ce rail 5e et situé à proximité des coulisseaux 8 ; il apparaît également que la saillie que fait chaque organe de poussée 20 par rapport à la chaîne 16 permet qu'au moins un organe de poussée 20 soit apte, au niveau de ce brin, à venir en prise avec des galets 28 que comprennent les coulisseaux 8. La figure 6 montre plus particulièrement un tel galet 28.

Comme visible sur les figures 5, 7 et 8, chaque organe de poussée 20 comprend une partie de base 30 reliée à la chaîne 16 et une partie d'extrémité libre 31 reliée à la partie de base 30 de façon télescopique. Chaque partie de base 30 forme une partie inférieure lisse permettant un glissement de l'organe de poussée 20 contre la structure d'appui 23. Chaque partie d'extrémité libre 31 présente une tige engagée à coulissement dans la partie de base 30 et une partie terminale présentant une forme adaptée à venir porter contre le galet 28 correspondant d'un coulisseau 8, cette forme étant en L dans l'exemple représenté. Chaque organe de poussée 20 comprend en outre un ressort 32 interposé entre la partie de base 30 et la partie d'extrémité libre 31, exerçant une pression sur la partie de base 30 et sur la partie d'extrémité libre 31 de façon à maintenir normalement cette partie d'extrémité libre dans une position d'extension par rapport à la partie de base 30.

Il apparaît sur la figure 8 que chaque partie d'extrémité libre 31 est apte à être amenée dans une position de rétractation, par coulissement de ladite tige dans la partie de base 30 à l'encontre de la force élastique du ressort 32, en cas de conflit entre un galet 28 d'un coulisseau 8 et la partie d'extrémité libre 31.

La figure 7 montre par ailleurs les différents galets 35 qui permettent le roulement des coulisseaux 6 et 8 le long des rails 5i et 5e.

Le motoréducteur 21 est, quant à lui, de type classique, bien connu en lui-même, et n'a donc pas à être particulièrement décrit en détails. Il inclut un variateur de vitesse.

L'enceinte 22 de protection thermique présente des doublures isolantes et est reliée à un système de ventilation (non représenté) par des ouvertures d'entrée et de sortie d'air.

L'unité 24 de commande du motoréducteur 21 inclut des moyens électroniques de traitement des signaux transmis par les capteurs 25, des moyens électroniques de commande du variateur de vitesse en fonction de la vitesse détectée par les capteurs 25, et des moyens électroniques de limitation du couple exercé par le motoréducteur 21 sur la roue 17.

En pratique, les mesures effectuées par les deux capteurs 25 permettent à l'unité centrale 24 de déterminer si l'étirement en cours et un étirement positif ou négatif, et d'adapter en conséquence le régime du motoréducteur 21. Le régime de ce dernier, et donc la vitesse de défilement des organes de poussée 20, est ainsi adapté en temps réel au déplacement des coulisseaux 8. S'il est déterminé que l'étirement en cours est un étirement négatif, l'unité centrale 24 agit sur le régime du motoréducteur 21 de telle sorte que la vitesse de déplacement des organes de poussée 20 au niveau du brin actif de la chaîne 16 soit légèrement supérieure à celle des coulisseaux 8 au niveau de ce brin. Cette vitesse légèrement supérieure amène au moins un des organes de poussée 20 se trouvant sur ledit brin de la chaîne 16 à venir en appui contre le galet 28 d'un coulisseau 8 et à exercer une poussée sur ce coulisseau par l'intermédiaire de ce galet, comme visible sur la figure 9. Cette poussée constitue une assistance au déplacement des coulisseaux 8, et donc également des coulisseaux 6 reliés à eux, le long des rails 5i et 5e, venant soulager la chaîne principale d'entraînement des ensembles coulisseaux 6, 8 et bielles 7. Cette assistance permet aux coulisseaux 6, 8 de se déplacer de façon adaptée le long des rails 5i, 5e même en cas d'efforts importants, en particulier en cas d'étirage de films à des températures relativement basses, ou lorsqu'il est nécessaire de mettre en oeuvre simultanément un étirage transversal et un étirage longitudinal négatif et que, par conséquent, les coulisseaux 6 et 8 doivent progresser sur des rails 5i, 5e qui divergent et qui s'infléchissent vers l'extérieur.

La structure d'appui 23 s'oppose à tout flambage de la chaîne 16 à l'occasion de l'exercice de cette poussée, éliminant le risque, en situation normale, d'échappement des organes de poussée 20 vis-à-vis des galets 28 et les risques de détérioration de ces organes de poussée en cas de surface de poussée trop réduite.

En cas de venue d'un organe de poussée 20 en conflit avec un galet 28, comme visible sur les figures 10 ou 11, la possibilité de rétraction de la partie d'extrémité libre 31 de l'organe de poussée 20 permet d'éviter toute détérioration de ce dernier ; la réduction de l'intervalle entre les coulisseaux 8 au fur et à mesure de la progression de ces coulisseaux sur le rail 5e fait qu'au moins un organe 20 situé en avant de l'organe 20 subissant le conflit vient en situation de poussée d'un galet 28 correspondant au long dudit brin de la chaîne 16.

En cas d'effort trop important exercé sur les organes de poussée 20, un échappement de ces organes de poussée 20, et donc un débrayage du sous-ensemble d'assistance, est également rendu possible, évitant un risque de détérioration de la machine 1, ce débrayage étant favorisé par la rotation du galet 28.

Les moyens électroniques de limitation du couple exercé par le motoréducteur 21 sur la roue 17, que comprend l'unité centrale 24 permet d'empêcher que le sous-ensemble d'assistance 10 subisse un à-coup lorsqu'un organe 20 passe au-delà d'un coulisseau 8 correspondant, ou en cas d'un échappement de cet organe 20 par rapport à ce coulisseau 8. Un tel à-coup serait néfaste à la qualité de l'étirement obtenu ainsi qu'à la résistance mécanique du sous-ensemble d'assistance 10.

Si les capteurs 25 permettent de déterminer que l'étirement en cours est un étirement positif, le régime du motoréducteur 21 sera également adapté à la fourniture de l'assistance requise, si nécessaire.

L'invention fournit ainsi une machine ayant pour avantage déterminant, par rapport aux machines homologues selon la technique antérieure, de permettre des taux d'étirement négatif importants, sans risques de générer une imprécision dans le positionnement des pinces ; cette machine a également pour avantage déterminant de ne pas impliquer une intervention mécanique pour être adaptée aux différentes valeurs d'écartement des pinces qui sont requises selon les différents types de films à étirer.

L'invention a été décrite plus haut en référence à une forme de réalisation fournie à titre d'exemple. Il va de soi qu'elle n'est pas limitée à ces formes de réalisation et que la portée de la protection est définie par les revendications annexées.

## Revendications

1. Machine (1) d'étirage de films (F) en matière thermoplastique simultanément dans le sens longitudinal et dans le sens transversal, comprenant :
- un tunnel chauffant (2) permettant l'échauffement de la matière plastique du film (F) à étirer ;
- deux chemins sans fin (3) de circulation de pinces (4) de saisie des bords latéraux du film (F), situés de part et d'autre du trajet du film (F) ;
- chaque chemin (3) présente une portion longitudinale interne (3a), s'étendant en partie à l'intérieur du tunnel chauffant (2), et une portion longitudinale externe (3b), s'étendant à l'extérieur de ce tunnel chauffant, chaque portion longitudinale interne (3a) étant formée par une paire de rails de guidage (5i, Se), dont un est dit "intérieur", c'est-à-dire le plus proche du bord du film, et l'autre est dit "extérieur", c'est-à-dire plus éloigné du bord de ce film (F) ;
- lesdites pinces (4) de saisie des bords latéraux du film (F), qui sont montées sur des coulisseaux (6), dits premiers coulisseaux, circulant le long du rail de guidage intérieur (5i) ;
- des paires de bielles (7) reliant ces premiers coulisseaux (6) à des deuxièmes coulisseaux (8) circulant le long du rail de guidage extérieur (5e) ;
**caractérisée en ce que** la machine (1) comprend au moins un sous-ensemble d'assistance (10) situé dans ledit tunnel chauffant (2), incluant :
- une chaîne ou courroie sans fin (16) ;
- une pluralité d'organes d'assistance (20), reliés à ladite chaîne ou courroie (16) en succession les uns des autres, et
- un moyen (21) d'entraînement de cette chaîne ou courroie,
ledit sous-ensemble d'assistance (10) étant disposé de manière à ce qu'un brin de ladite chaîne ou courroie (16) soit situé à proximité desdits coulisseaux (8), et ledit moyen d'entraînement (21) entraînant ladite chaîne ou courroie (16) de manière à ce que ce brin défile à proximité de ces coulisseaux (8), dans le même sens que le sens d'avancement de ces coulisseaux,
lesdits organes d'assistance étant des organes de poussée (20), faisant saillie de la chaîne ou courroie (16), sur l'extérieur de celle-ci, et étant dimensionnés de façon qu'au moins un de ces organes de poussée (20) soit amené par ledit brin sur le trajet desdits deuxièmes coulisseaux (8) ; et
ledit au moins un organe de poussée (20) venant porter contre au moins un de ces deuxièmes coulisseaux (8) et venant exercer sur ce coulisseau (8) une poussée d'assistance au déplacement de ce coulisseau (8) le long du rail (5e) sur lequel ce coulisseau (8) se déplace.

2. Machine (1) selon la revendication 1, **caractérisée en ce que** chaque sous-ensemble d'assistance (10) est situé sur l'extérieur dudit rail extérieur (5e).

3. Machine (1) selon la revendication 1 ou la revendication 2, **caractérisée en ce que** les roues (17) sur lesquelles circulent la chaîne ou courroie sans fin (16) d'un sous-ensemble d'assistance (10) ont des axes verticaux.

4. Machine (1) selon l'une des revendications 1 à 3, **caractérisée en ce que** chaque organe de poussée (20) est sous la forme d'un doigt faisant saillie de ladite chaîne ou courroie sans fin (16), sur l'extérieur de celle-ci.

5. Machine (1) selon l'une des revendications 1 à 4, **caractérisée en ce que** chaque organe de poussée (20) comprend une partie d'extrémité libre (31) qui est mobile par rapport à une partie de base (30) reliée à ladite chaîne ou courroie (16) ; cette mobilité se fait entre une position d'extension de la partie d'extrémité libre (31) par rapport à la partie de base (30), dans laquelle l'organe de poussée (20) est à même d'exercer une poussée contre un coulisseau (8), et une position rétractée de la partie d'extrémité libre (31) par rapport à cette partie de base (30), dans laquelle cette partie d'extrémité libre (31) est effacée vis-à-vis d'un coulisseau (8) ; un moyen élastique (32) agit sur chaque partie d'extrémité libre (31) de façon à maintenir normalement cette partie d'extrémité libre (31) dans ladite position d'extension.

6. Machine (1) selon l'une des revendications 1 à 5, **caractérisée en ce qu'**elle comprend une pluralité de sous-ensembles d'assistance (10), dont chacun présente une longueur inférieure à la longueur (L) de la zone d'une portion longitudinale interne (3a) au niveau de laquelle un étirement du film (F) est susceptible d'être réalisé, en particulier une longueur inférieure à sensiblement à un quart de la longueur (L) d'une telle zone, et de préférence inférieure à un huitième, voire moins, de cette longueur (L).

7. Machine (1) selon la revendication 6, **caractérisée en ce que** les sous-ensembles d'assistance (10) sont situés en regard les uns des autres dans le sens transversal de la direction d'avance du film (F).

8. Machine (1) selon l'une des revendications 1 à 7, **caractérisée en ce que** la portion d'un coulisseau (8) contre laquelle un organe de poussée (20) est apte à être amené à exercer une poussée est sous la forme d'un galet (28).

9. Machine (1) selon l'une des revendications 1 à 8, **caractérisée en ce que** chaque sous-ensemble d'assistance (10) comprend des moyens électroniques de limitation du couple d'entraînement exercé par le moyen d'entraînement (21) sur ladite chaîne ou courroie (16).

10. Machine (1) selon l'une des revendications 1 à 9, **caractérisée en ce que** chaque sous-ensemble d'assistance (10) comprend une structure d'appui (23) contre laquelle porte ledit brin de ladite chaîne ou courroie (16).

11. Machine (1) selon l'une des revendications 1 à 10, **caractérisée en ce que** chaque sous-ensemble d'assistance (10) comprend un moteur (21) d'entraînement de ladite chaîne ou courroie (16), ce moteur (21) étant placé dans une enceinte (22) de protection thermique.

12. Machine (1) selon la revendication 10, **caractérisée en ce que** l'enceinte (22) de protection thermique est refroidie.

13. Machine (1) selon l'une des revendications 1 à 12, **caractérisée en ce que** chaque sous-ensemble d'assistance (10) inclut un moyen de variation du régime du moteur d'entraînement (21) et des moyens (25) de détection de la vitesse de déplacement des coulisseaux (8) en amont et en aval de ce sous-ensemble d'assistance (10), ces moyens de détection (25) étant reliés à une unité centrale (24) de commande dudit moyen de variation du régime du moteur.

14. Procédé de réalisation de l'étirage d'un film (F) thermoplastique, comprenant les étapes consistant à :
- utiliser la machine (1) selon la revendication 13 ; et
- régler le régime dudit moteur d'entraînement (21) au moyen dudit variateur, lui-même commandé par l'unité centrale (24) en fonction des détections opérées par les moyens (25) de détection de la vitesse de déplacement des coulisseaux (8), de telle sorte qu'en cas de détection de la réalisation d'un étirement négatif, ce régime soit tel que ladite chaîne ou courroie (16) circule, au niveau dudit brin, à une vitesse linéaire supérieure à la vitesse linéaire des coulisseaux (8) au niveau de ce même brin.

## Patentansprüche

1. Maschine (1) zum Strecken von thermoplastischen Folien (F) in Längsrichtung und in Querrichtung gleichzeitig, umfassend:
- einen Heiztunnel (2) zum Aufheizen des Thermoplasts der zu streckenden Folie (F);
- zwei Endlosbahnen (3) für den Umlauf von Klauen (4) zum Ergreifen der seitlichen Ränder der Folie (F), die sich beiderseits der Bewegungsbahn der Folie (F) befinden;
- jede Bahn (3) weist einen inneren Längsabschnitt (3a), der sich zum Teil im Inneren des Heiztunnels (2) erstreckt, und einen äußeren Längsabschnitt (3b), der sich außerhalb dieses Heiztunnels (2) erstreckt, auf, wobei jeder innere Längsabschnitt (3a) von einem Paar Führungsschienen (5i, 5e) gebildet ist, von denen eine als "innere", das heißt dem Rand der Folie nächstgelegen, bezeichnet wird, und die andere als "äußere", das heißt vom Rand Folie (F) weiter entfernt, bezeichnet wird,
- wobei die Klauen (4) zum Ergreifen der seitlichen Ränder der Folie (F), die auf Schiebeelementen (6), so genannte erste Schiebeelemente, gelagert sind, entlang der inneren Führungsschiene (5i) umlaufen;
- Paare von Stangen (7), die diese ersten Schiebeelemente (6) mit zweiten Schiebeelementen (8) verbinden, die entlang der äußeren Führungsschiene (5e) umlaufen;
**dadurch gekennzeichnet, dass** die Maschine (1) wenigstens eine unterstützende Baugruppe (10) umfasst, die sich in dem Heiztunnel (2) befindet, umfassend:
- eine Endloskette oder einen Endlosriemen (16);
- eine Mehrzahl von unterstützenden Organen (20), die mit der Kette oder dem Riemen (16) hintereinander verbunden sind, und
- ein Mittel (21) zum Antreiben dieser Kette oder dieses Riemens,
wobei die unterstützende Baugruppe (10) so angeordnet ist, dass ein Strang der Kette oder des Riemens (16) sich in der Nähe der Schiebeelemente (8) befindet, und wobei das Antriebsmittel (21) die Kette oder den Riemen (16) so antreibt, dass jeder Strang in der Nähe dieser Schiebelemente (8) vorbeiläuft, in der gleichen Richtung wie die Vorschubrichtung dieser Schiebeelemente,
wobei die unterstützenden Organe (20) Schuborgane (20) sind, die über die Kette oder den Riemen (16), auf der Außenseite davon, überstehen und so dimensioniert sind, dass wenigstens eines von diesen Schuborganen (20) durch den Strang auf die Bewegungsbahn der zweiten Schiebeelemente (8) gebracht wird; und
wobei wenigstens eines von den Schuborganen (20) gegen wenigstens eines von diesen zweiten Schiebeelementen (8) zum Anliegen kommt und auf dieses Schiebeelement (8) einen Schub zum Unterstützen der Bewegung dieses Schiebelements (8) entlang der Schiene (5e), auf der sich dieses Schiebelement (8) bewegt, ausübt.

2. Maschine (1) nach Anspruch 1, **dadurch gekennzeichnet, dass** jede unterstützende Baugruppe (10) sich auf der Außenseite der äußeren Schiene (5e) befindet.

3. Maschine (1) nach Anspruch 1 oder Anspruch 2, **dadurch gekennzeichnet, dass** die Räder (17), auf denen die Endloskette oder der Endlosriemen (16) einer unterstützenden Baugruppe (10) umlaufen, vertikale Achsen aufweisen.

4. Maschine (1) nach einem der Ansprüche 1 bis 3, **dadurch gekennzeichnet, dass** jedes Schuborgan (20) die Form eines Fingers hat, der über die Endloskette oder den Endlosriemen (16), auf der Außenseite davon, übersteht.

5. Maschine (1) nach einem der Ansprüche 1 bis 4, **dadurch gekennzeichnet, dass** jedes Schuborgan (20) einen freien Endteil (31) umfasst, der relativ zu einem Basisteil (30), das mit der Kette oder dem Riemen (16) verbunden ist, beweglich ist; wobei diese Beweglichkeit zwischen einer relativ zu dem Basisteil (30) ausgedehnten Position des freien Endteils (31), in der das Schuborgan (20) in der Lage ist, einen Schub gegen das Schiebelement (8) auszuüben, und einer relativ zu diesem Basisteil (30) eingezogenen Position des freien Endteils (31), in der dieser freie Endteil (31) gegenüber einem Schiebeelement (8) zurückgezogen ist, erfolgt; ein Federmittel (32) auf jeden freien Endteil (31) so einwirkt, dass dieser freie Endteil (31) normalerweise in der ausgedehnten Position gehalten wird.

6. Maschine (1) nach einem der Ansprüche 1 bis 5, **dadurch gekennzeichnet, dass** sie eine Mehrzahl von unterstützenden Baugruppen (10) umfasst, von denen jede eine Länge aufweist, die kleiner ist als die Länge (L) der Zone eines inneren Längsabschnitts (3a), im Bereich von der eine Streckung der Folie (F) realisiert werden kann, insbesondere eine Länge, die kleiner ist als im Wesentlichen ein Vierteil der Länge (L) einer derartigen Zone, und bevorzugt kleiner als ein Achtel, oder sogar weniger, dieser Länge (L).

7. Maschine (1) nach Anspruch 6, **dadurch gekennzeichnet, dass** die unterstützenden Baugruppen (10) sich in der Richtung quer zu der Vorschubrichtung der Folie (F) einander gegenüber befinden.

8. Maschine (1) nach einem der Ansprüche 1 bis 7, **dadurch gekennzeichnet, dass** der Abschnitt eines Schiebeelements (8), gegen den ein Schuborgan (20) zur Ausübung eines Drucks veranlasst werden kann, die Form einer Rolle (28) aufweist.

9. Maschine (1) nach einem der Ansprüche 1 bis 8, **dadurch gekennzeichnet, dass** jede unterstützende Baugruppe (10) elektronische Mittel zur Begrenzung des Antriebsmoments, das von dem Antriebsmittel (21) auf die Kette oder den Riemen (16) ausgeübt wird, umfasst.

10. Maschine (1) nach einem der Ansprüche 1 bis 9, **dadurch gekennzeichnet, dass** jede unterstützende Baugruppe (10) eine Stützstruktur (23) umfasst, gegen die der Strang der Kette oder des Riemens (16) zum Anliegen kommt.

11. Maschine (1) nach einem der Ansprüche 1 bis 10, **dadurch gekennzeichnet, dass** jede unterstützende Baugruppe (10) einen Motor (21) zum Antreiben der Kette oder des Riemens (16) umfasst, wobei dieser Motor (21) in einem Wärmeschutzgehäuse (22) platziert ist.

12. Maschine (1) nach Anspruch 10, **dadurch gekennzeichnet, dass** das Wärmeschutzgehäuse (22) gekühlt ist.

13. Maschine (1) nach einem der Ansprüche 1 bis 12, **dadurch gekennzeichnet, dass** jede unterstützende Baugruppe (10) ein Mittel zum Regeln der Drehzahl des Antriebsmotors (21) und Mittel (25) zum Detektieren der Bewegungsgeschwindigkeit der Schiebeelemente (8) vor und hinter dieser unterstützenden Baugruppe (10) umfasst, wobei dieses Detektionsmittel (25) mit einer Zentraleinheit (24) zum Steuern des Mittels zum Regeln der Drehzahl des Motors verbunden ist.

14. Verfahren zum Realisieren der Streckung einer thermoplastischen Folie (F), umfassend die folgenden Schritte:
- Verwenden der Maschine (1) nach Anspruch 13; und
- Regeln der Drehzahl des Antriebsmotors (21) mittels des Reglers, der seinerseits von der Zentraleinheit (24) in Abhängigkeit von den Detektionen gesteuert wird, die von den Mitteln (25) zum Detektieren der Bewegungsgeschwindigkeit der Schiebeelemente (8) durchgeführt werden, so dass, für den Fall einer Detektion der Realisierung einer negativen Streckung, die Drehzahl dergestalt ist, dass die Kette oder der Riemen (16), im Bereich des Stranges, mit einer linearen Geschwindigkeit umläuft, die größer ist als die lineare Geschwindigkeit der Schiebeelemente (8) im Bereich dieses Stranges.

## Claims

1. Machine (1) for stretching films (F) made of thermoplastic material simultaneously in the longitudinal direction and in the transverse direction, comprising:
- a heating tunnel (2) for heating the plastic material of the film (F) to be stretched;
- two endless paths (3) for the circulation of grippers (4) for gripping the lateral edges of the film (F) located on either side of the course of the film (F);
- each path (3) has an inner longitudinal portion (3a), extending partly inside the heating tunnel (2), and an outer longitudinal portion (3b), extending outside this heating tunnel, each inner longitudinal portion (3a) being formed by a pair of guide rails (5i, 5e), one of which being referred to as "inner", in other words closer to the edge of the film, and the other being referred to as "outer", in other words further away from the edge of this film (F);
- said grippers (4) for gripping the lateral edges of the film (F), which are mounted on sliders (6), referred to as first sliders, running along the inner guide rail (5i);
- pairs of connecting rods (7) connecting these first sliders (6) to second sliders (8) running along the outer guide rail (5e);
**characterised in that** the machine (1) comprises at least one assistance sub-assembly (10) located in said heating tunnel (2), including:
- an endless chain or belt (16);
- a plurality of assistance members (20), connected to said chain or belt (16) in succession one after the other, and
- a means (21) for driving this chain or belt,
said assistance sub-assembly (10) being arranged so that a strand of said chain or belt (16) is located close to said sliders (8), and said drive means (21) driving said chain or belt (16) so that this strand moves near these sliders (8) in the same direction as the direction of travel of these sliders,
said assistance members being thrust members (20), protruding from the chain or belt (16) on the outside thereof, and being designed so that at least one of these thrust members (20) is brought by said strand on the course of said second sliders (8); and
said at least one thrust member (20) bearing against at least one of these second sliders (8) and exerting a thrust on this slider (8) to assist the displacement of this slider (8) along the rail (5e) on which this slider (8) moves.

2. Machine (1) according to claim 1, **characterised in that** each assistance sub-assembly (10) is located on the outside of said outer rail (5e).

3. Machine (1) according to claim 1 or claim 2, **characterised in that** the wheels (17) on which the endless chain or belt (16) of an assistance sub-assembly (10) have vertical axes.

4. Machine (1) according to one of claims 1 to 3, **characterised in that** each thrust member (20) consists of a pin protruding from said endless chain or belt (16), on the outside thereof.

5. Machine (1) according to one of claims 1 to 4, **characterised in that** each thrust member (20) comprises a free end part (31) which is movable relative to a base part (30) connected to said chain or belt (16); this mobility occurs between an extended position of the free end part (31) relative to the base part (30), in which the thrust member (20) is capable of exerting a thrust against a slider (8), and a retracted position of the free end part (31) relative to this base part (30), in which this free end part (31) is removed with respect to a slider (8); an elastic means (32) acts on each free end part (31), in order to normally hold this free end part (31) in said extended position.

6. Machine (1) according to one of claims 1 to 5, **characterised in that** it comprises a plurality of assistance sub-assemblies (10), each of which having a length less than the length (L) of the zone of an inner longitudinal portion (3a) where stretching of the film (F) is likely to take place, in particular a length less than substantially one quarter of the length (L) of such a zone, and preferably less than one eighth, or even less, of this length (L).

7. Machine (1) according to claim 6, **characterised in that** the assistance sub-assemblies (10) face each other in the transverse direction of the direction of advance of the film (F).

8. Machine (1) according to one of claims 1 to 7, **characterised in that** the portion of a slider (8) against which a thrust member (20) is adapted to exert a thrust consists of a roller (28).

9. Machine (1) according to one of claims 1 to 8, **characterised in that** each assistance sub-assembly (10) comprises electronic means for limiting the drive torque exerted by the drive means (21) on said chain or belt (16).

10. Machine (1) according to one of claims 1 to 9, **characterised in that** each assistance sub-assembly (10) comprises a support structure (23) against which said strand of said chain or belt (16) bears.

11. Machine (1) according to one of claims 1 to 10, **characterised in that** each assistance sub-assembly (10) comprises a motor (21) for driving said chain or belt (16), this motor (21) being placed in a thermal protection enclosure (22).

12. Machine (1) according to claim 10, **characterised in that** the thermal protection enclosure (22) is cooled.

13. Machine (1) according to one of claims 1 to 12, **characterised in that** each assistance sub-assembly (10) includes a means for varying the speed of the drive motor (21) and means (25) for detecting the speed of movement of the sliders (8) upstream and downstream from this assistance sub-assembly (10), these detection means (25) being connected to a central unit (24) for controlling said means for varying the speed of the motor.

14. Method for stretching a thermoplastic film (F), comprising the steps of:
- using the machine (1) according to claim 13; and
- adjusting the speed of said drive motor (21) using said variable speed drive, that is itself controlled by the central unit (24) according to the detections made by the means (25) for detecting the speed of movement of the sliders (8), so that, if a negative stretch is detected, this speed is such that said chain or belt (16) runs, at said strand, at a linear speed greater than the linear speed of the sliders (8) at this strand.
